# EUROPÄISCHE PATENTSCHRIFT

(11) **EP 4 341 539 B1**
(45) Veröffentlichungstag und Bekanntmachung des Hinweises auf die Patenterteilung: **23.04.2025**
(21) Anmeldenummer: 22718986.7
(22) Anmeldetag: 31.03.2022
(51) Int. Cl.: F01P 11/04, F01P 3/12, F01P 7/14

(54) **LEITUNGSELEMENT FÜR EINE FLÜSSIGKEITSGEKÜHLTE KOMPONENTE EINES VERBRENNUNGSMOTORS**
CONDUCTOR ELEMENT FOR A FLUID-COOLED COMPONENT OF AN INTERNAL COMBUSTION ENGINE
ÉLÉMENT CONDUCTEUR DESTINÉ À UN COMPOSANT À REFROIDISSEMENT PAR FLUIDE D'UN MOTEUR À COMBUSTION INTERNE

(30) Priorität: 18.05.2021 DE 102021205021
(43) Veröffentlichungstag der Anmeldung: 27.03.2024
(73) Patentinhaber: Stellantis Auto SAS, 78300 Poissy (FR)
(72) Erfinder: BRINKER, Michael, 65428 Rüsselsheim am Main (DE); MARZOUKI, Taoufik, 65428 Rüsselsheim am Main (DE); ALBRECHT, Mathias, 65428 Rüsselsheim am Main (DE)
(74) Vertreter: PSIP
(86) Internationale Anmeldenummer: PCT/EP2022/058525
(87) Internationale Veröffentlichungsnummer: WO 2022/242948

(56) Entgegenhaltungen:
- EP-A1- 2 878 786
- EP-A2- 2 100 013
- DE-A1- 102017 125 412
- DE-T2- 69 100 088
- GB-A- 2 419 938
- US-B1- 6 213 062
- US-B2- 10 196 960
- ANONYMOUS: "EPMAN cgq224 Turbo Wasser Flansch Armatur zu-4 Eine Flare Turbo Feed Ablauf Flansch Kit : Amazon.de: Auto & Motorrad", 27 August 2018 (2018-08-27), pages 1 - 3, XP055947359, Retrieved from the Internet <URL:https://www.amazon.de/EPMAN-cgq224-Turbo-Flansch-Armatur-zu-4-Eine/dp/B07GT71TM5> [retrieved on 20220729]
- ANONYMOUS: "EPMAN cgq224 Turbo Wasser Flansch Armatur zu-4 Eine Flare Turbo Feed Ablauf Flansch Kit : Amazon.de: Auto & Motorrad", 27 August 2018 (2018-08-27), pages 1 - 3, XP055947360, Retrieved from the Internet <URL:https://www.amazon.de/EPMAN-cgq224-Turbo-Flansch-Armatur-zu-4-Eine/dp/B07GT71TM5> [retrieved on 20220729]

## Beschreibung

### Technisches Gebiet

Die Offenbarung betrifft ein Leitungselement für eine flüssigkeitsgekühlte Komponente eines Verbrennungsmotors, mit einer Zuleitung zur Zuführung von Kühlflüssigkeit an die Komponente und einer Ableitung zur Abführung von Kühlflüssigkeit aus der Komponente. DE102012205850B4 offenbart einen Zwischenkühler-Kühlfluidkreislauf, der mit einem Turbolader eines Verbrennungsmotors gekoppelt ist und mit diesem in Fluidkommunikation steht, um eine Kühlfluidströmung an den Turbolader zur Kühlung des Turboladers umzuwälzen. Ein Turbolader-Kühlungssteuerventil steuert eine Fluidströmung zwischen dem Turbolader und einem Zwischenkühler. Das Turbolader-Kühlungssteuerventil lenkt die Strömung des Kühlfluides an den Zwischenkühler, wenn der Motor läuft, und lenkt die Strömung von Kühlfluid an den Turbolader, wenn der Motor nicht läuft. Das Fahrzeug verwendet eine Zwischenkühlerpumpe zum Umwälzen des Kühlfluides an sowohl den Zwischenkühler, wenn das Fahrzeug läuft, als auch den Turbolader, wenn das Fahrzeug nicht läuft.

### Beschreibung

Aus dem Stand der Technik sind die DE69100088T2 und die EP 2 878 786 A1 bekannt.

Gemäß der vorliegenden Offenbarung soll ein passives Leitungselement angegeben werden, das ohne aktive Steuerungselemente wie zum Beispiel Ventile an einer Komponente anschließbar ist, und das es ermöglicht, einen Teil eines Kühlmittelstroms an der Komponente vorbeizuleiten.

Ein entsprechendes Leitungselement ist in Anspruch 1 angegeben. Die Unteransprüche bilden vorteilhafte Weiterbildungen der Offenbarung aus. Die Unteransprüche können in technologisch sinnvoller Weise miteinander kombiniert werden. Die Beschreibung, insbesondere im Zusammenhang mit den Figuren, charakterisiert und spezifiziert die Offenbarung zusätzlich.

Vorgesehen ist demgemäß ein Leitungselement für eine flüssigkeitsgekühlte Komponente eines Verbrennungsmotors, mit einer Zuleitung zur Zuführung von Kühlflüssigkeit an die Komponente und einer Ableitung zur Abführung von Kühlflüssigkeit aus der Komponente, wobei die Komponente einen inneren Kühlmittelpfad aufweist, der einen Einlass aufweist, der fluidleitend mit der Zuleitung verbindbar ist, und einen Auslass, der fluidleitend mit der Ableitung verbindbar ist, und wobei die Zuleitung außerdem über eine Bypassverbindung mit der Ableitung verbunden ist.

Bei der Komponente handelt es sich um ein Lagergehäuse eines Verdichters, insbesondere um ein Lagergehäuse eines Verdichters eines Turboladers. Der innere Kühlmittelpfad kann in einem Lagergehäuse des Verdichters verlaufen. Das Leitungselement kann einstückig oder mehrstückig aufgebaut sein. Das Leitungselement kann Anbindungen zur fluidleitenden Anbindung von flexiblen oder starren Leitungsabschnitten aufweisen. Die fluidleitende Verbindung kann durch eine Rohranbindung mit entsprechenden Abdichtungen gegenüber miteinander verbundenen Elementen gebildet sein. Die Rohranbindung kann Ventile und Abzweigungen aufweisen. Eine fluidleitende Verbindung ist gegeben, wenn Fluide von einem Element in das nächste Element geleitet werden können. Als Kühlflüssigkeit kann Wasser, insbesondere Kühlwasser mit einem Frostschutz verwendet werden.

In einer Ausgestaltung ist vorgesehen, dass die Bypassverbindung als Aussparung in der Komponente zwischen dem Einlass und dem Auslass gebildet ist, wobei eine gemeinsame Dichtung vorgesehen ist, welche den Einlass, den Auslass und die Aussparung gegenüber der Umgebung abdichten.

Indem die Bypassverbindung in der Komponente, beispielsweise dem Lagergehäuse des Turboladers angeordnet wird, ist zur Umsetzung der anspruchsgemäßen Ausführung nur eine minimale Änderung gegenüber einem konventionellen Anschluss notwendig. Es muss lediglich eine Aussparung in die Komponente bzw. in das Lagergehäuse eingegossen oder eingefräst werden.

In einer Ausgestaltung ist vorgesehen, dass die Bypassverbindung als Aussparung in dem Leitungselement in einem Flansch zur mechanischen und fluidleitenden Anbindung der Zuleitung an den Einlass sowie der Ableitung an den Auslass ausgebildet ist, wobei eine gemeinsame Dichtung vorgesehen ist, welche den Flansch und die Bypassverbindung gegenüber der Komponente abdichten.

Hierdurch werden bei vielen Anwendungen, in denen bisher ein einstückiges Leitungselement verwendet wurde, an der Komponente gar keine Änderungen nötig. Lediglich das Leitungselement muss im Bereich der Zu- und Ableitung geändert werden.

In einer Ausgestaltung ist vorgesehen, dass die Bypassverbindung als Leitungsabschnitt ausgebildet ist, der stromaufwärts von der Zuleitung und stromabwärts von der Ableitung in dem Leitungselement angeordnet ist.

Der Leitungsabschnitt ist eine Rohrverbindung zwischen den Abschnitten des Leitungselements, von denen sich die Zu- bzw. Ableitung zu der Komponente erstreckt. Die Rohrverbindung kann starr oder flexibel sein. Die Rohrverbindung kann zur Erreichung eines bestimmten Verhältnisses einer Durchflussrate durch die Komponente in Bezug auf die Durchflussrate durch die Rohrverbindung dimensioniert sein. Sowohl die Komponente als auch die Rohrverbindung wirken also Drossel, weniger als Blende. Demnach hängt der über sie geleitet Volumenstrom nur von einer Konstante und der Druckdifferenz zwischen der Zuleitung und der Ableitung ab. Offenbarungsgemäß soll erreicht werden, dass ein überwiegender Anteil an Kühlmittel an der Komponente vorbei fließt, damit die Komponente mit dem Leitungsabschnitt in Reihe geschaltet werden kann mit Komponenten und Kühlern, die einen vielfach höheren Volumenstrom an Kühlmedium benötigen.

In einer Ausgestaltung ist daher vorgesehen, dass ein Strömungswiderstand der Bypassverbindung geringer ist als ein Strömungswiderstand des inneren Kühlmittelpfads der Komponente.

In einer weiteren Ausgestaltung ist vorgesehen, dass der Strömungswiderstand der Bypassverbindung für Fluide mit einer Dichte und Viskosität, wie sie Kühlwasser aufweist, 2- bis 4-mal, insbesondere 2,5 bis 3,5-mal geringer ist als der Strömungswiderstand des inneren Kühlmittelpfads der Komponente.

In einer Ausgestaltung ist vorgesehen, dass das Leitungselement stromabwärts von einem Ölkühler angeordnet ist, wobei der Ölkühler dazu ausgestaltet ist, einen Wärmestrom zwischen Motoröl aus dem Verbrennungsmotor mit der Kühlflüssigkeit auszutauschen.

Bei dieser Ausgestaltung kann ein Strang einer Kühlleitung verwendet werden, um sowohl den Ölkühler als auch den Turbolader zu kühlen. Der Ölkühler weist einen geringeren Strömungswiderstand auf als der Turbolader. Im Ölkühler wird ein Wärmestrom zwischen dem Kühlwasser und dem Motoröl ausgetauscht. Durch die Verwendung des Leitungselements mit der Bypassverbindung können der Turbolader und der Ölkühler hintereinander in dem Strang einer Kühlleitung angeordnet werden.

In einer Ausgestaltung ist vorgesehen, dass stromabwärts von dem Ölkühler eine Wasserpumpe zur Förderung von Kühlflüssigkeit durch den Ölkühler, das Leitungselement und die Komponente vorgesehen ist.

Der Turbolader kann zur Vermeidung von Verkokungen auch nach dem Betrieb des Verbrennungsmotors noch gekühlt werden. Auch eine Alterung des Motoröls kann verlangsamt werden, wenn die Stauhitze im Verbrennungsmotor nach dessen Betrieb abgeführt wird. Im Betrieb wiederum kann ein Volumenstrom an Kühlmittel anhand des tatsächlichen Kühlbedarfs des Ölkühlers und des Turboladers gesteuert werden. Wenn die Temperatur des Motoröls einen Schwellenwert überschreitet, kann die Förderleistung der Pumpe erhöht werden. Wenn das Motoröl noch kalt ist, ist eventuell gar kein Volumenstrom an Kühlmittel notwendig.

### Kurzbeschreibung der Figuren

Die hierin beschriebenen Zeichnungen dienen nur zu Veranschaulichungszwecken und sollen den Umfang der vorliegenden Offenbarung in keiner Weise einschränken. Es zeigen:
Fig. 1: schematisch einen Verbrennungsmotor mit einem Kühlmittelsystem, das einen Kühlmittelseitenstrang aufweist, der von dem Motorblock des Verbrennungsmotors durch einen Ölkühler und ein Lagergehäuse eines Turboladers verläuft, wobei der Kühlmittelseitenstrang unabhängig von einem Hauptkühlkreislauf des Verbrennungsmotors betrieben werden kann und bedarfsgerecht gesteuert werden kann, also in Abhängigkeit von dem Kühlungsbedarf an dem Ölkühler und dem Turbolader,
Fig. 2: schematisch einen Kühlmittelsystemabschnitt für einen Verbrennungsmotor, mit einer elektrischen Zusatzpumpe, die Kühlmittel aus einem inneren Kühlmittelpfad im Verbrennungsmotor durch einen Ölkühler und einen inneren Kühlmittelpfad in einem Lagergehäuse eines Turboladers fördert,
Fig. 3: ein Lagergehäuse eines Turboladers, die zu einer Bypassverbindung korrespondiert, wobei in dem Lagergehäuse in einer Dichtfläche eine Aussparung in der Komponente zwischen dem Einlass und dem Auslass gebildet ist,
Fig. 4: ein Leitungselement zur Zuführung von Kühlwasser an ein Lagergehäuse eines Turboladers, wobei eine Aussparung zwischen einem Flansch zur Anbindung der Zuleitung an den Einlass und einem Flansch zur fluidleitenden Anbindung der Ableitung an den Auslass ausgebildet ist, und
Fig. 5: einen Leitungsabschnitt zur Zuführung von Kühlwasser an ein Lagergehäuse eines Turboladers, wobei eine Bypassverbindung als Leitungsabschnitt ausgebildet ist, der stromaufwärts von der Zuleitung und stromabwärts von der Ableitung in dem Leitungselement angeordnet ist.

Die folgende Beschreibung ist dem Wesen nach lediglich veranschaulichend. Der Klarheit halber sind in den Zeichnungen zur Bezeichnung ähnlicher Elemente dieselben Bezugszeichen verwendet. Die Zeichnungen sind zumindest teilweise schematisch. Es können weitere, nicht dargestellte Elemente wie Ventile, Steuerelemente, Verdichter, Pumpen und Leitungen vorgesehen sein, die die vorhandenen Elemente ergänzen. Die Verwendung des Singular in Bezug auf die Ventile ist nicht so aufzufassen, dass tatsächlich nur ein Ventil an der entsprechenden Position vorgesehen sein muss.

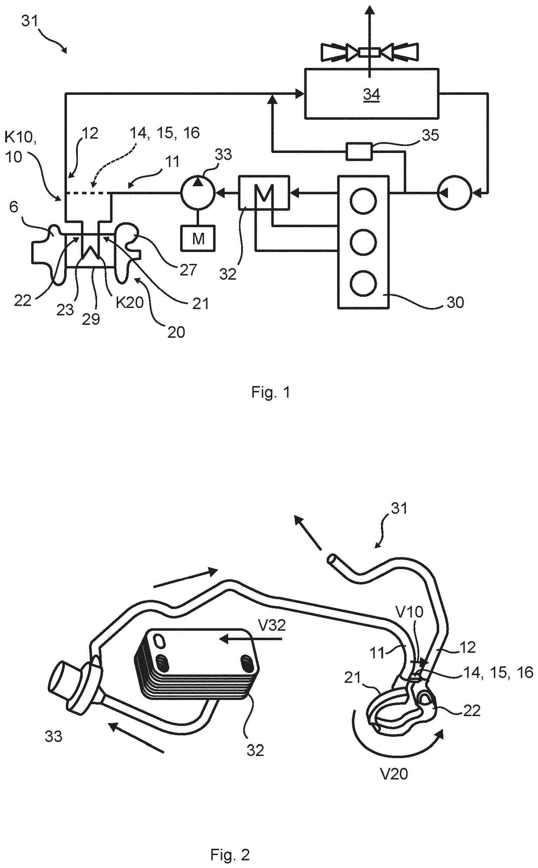

Figur 1 zeigt schematisch einen Kühlmittelkreislauf eines Verbrennungsmotors 30. Der Kühlmittelkreislauf weist einen Strang auf, der in nicht dargestellter Weise durch den Verbrennungsmotor 30 bzw. den nicht näher dargestellten Motorblock verläuft. Im Betrieb gibt der Verbrennungsmotor 30 Abwärme an ein Kühlmedium ab, das in dem Kühlmittelkreislauf zirkuliert und in einem Kühler 34 an die Umgebung abgegeben werden kann. Das Kühlmedium wird vielfach durch eine nicht dargestellte Wasserpumpe durch den Kühler und den Verbrennungsmotor 30 gefördert. Die Wasserpumpe läuft im Betrieb des Verbrennungsmotors immer mit, selbst wenn das Kühlmedium noch kalt ist. Vielfach ist ein schaltbarer Bypass 35 vorgesehen, der temperaturabhängig geöffnet werden kann. Der Bypass wird häufig als Thermostat bezeichnet. Wenn das Kühlmedium noch nicht auf Betriebstemperatur ist, zirkuliert es in dem Motorblock und wird somit schneller auf die notwendige Betriebstemperatur gebracht.

In einer Strömungsrichtung des Kühlmittels aus dem Verbrennungsmotor 30 betrachtet ist stromabwärts von einem Ölkühler 32 ein Turbolader 20 angeordnet, wobei in dem Ölkühler 32 ein Wärmestrom zwischen Motoröl aus dem Verbrennungsmotor 30 und der Kühlflüssigkeit ausgetauscht wird.

Stromabwärts von dem Ölkühler 32 wiederum ist eine zusätzliche elektrische Wasserpumpe 33 zur Förderung von Kühlflüssigkeit durch den Ölkühler 32 und ein Lagergehäuse eines Turboladers 20 vorgesehen.

An dem Turbolader 20 ist zu diesem Zweck ein Leitungselement 10 angeschlossen, mit einer Zuleitung 11 zur Zuführung von Kühlflüssigkeit an das Lagergehäuse 29 und einer Ableitung 12 zur Abführung von Kühlflüssigkeit aus dem Lagergehäuse. In dem Lagergehäuse ist ein integrierter, Kühlkreislauf 23 vorgesehen, der einen Einlass 21 aufweist, der fluidleitend mit der Zuleitung 11 verbindbar ist, und einem Auslass 22, der fluidleitend mit der Ableitung 12 verbindbar ist. Die Zuleitung 11 ist außerdem über eine Bypassverbindung 14,15, 16 fluidleitend mit der Ableitung 12 verbunden.

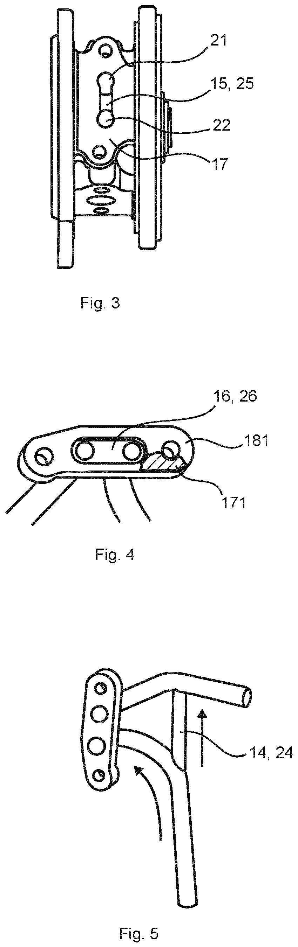

Eine erste Ausführungsform einer Bypassleitung 15 ist in Figur 3 im Detail dargestellt. Bei der ersten Ausführungsform der Bypassleitung 15 ist eine Aussparung 25 im Lagergehäuse des Turboladers 20 vorgesehen. Durch die Aussparung ist der Einlass 21 mit dem Auslass 22 verbunden.

Eine zweite Ausführungsform einer Bypassleitung 16 ist in Figur 4 im Detail gezeigt. Hier ist über eine Aussparung 26 im Leitungselement die Zuleitung 11 mit der Ableitung 12 verbunden.

Eine dritte Ausführungsform einer Bypassleitung 14 ist in Figur 5 im Detail dargestellt. Hier wird ein Bypass geschaffen, indem eine Rohrverbindung 24 zwischen der Zuleitung 11 und der Ableitung 12 vorgesehen wird.

Der Zweck der jeweiligen Bypassleitungen 14, 15, und 16 ist dabei, ein und denselben Leitungsabschnitt für die Kühlung des Turboladers 20 zu verwenden, wie für den Ölkühler 32. An sich wäre der Volumenstrom V32, der durch den Ölkühler 32 fließt, zu hoch, um durch das Lagergehäuse 29 geleitet werden zu können, da der Kühlkreislauf 23 in dem Lagergehäuse 29 zerklüftet ist und Kurven aufweist, die den Strömungswiderstand erhöhen. Deshalb kann überschüssiges Kühlmedium an dem Turbolader 20 vorbei durch die Bypassverbindung geleitet werden.

Wie gesagt zeigt Figur 3, dass die Bypassverbindung 15 als Aussparung 25 in dem Lagergehäuse des Turboladers 20 zwischen dem Einlass 11 und dem Auslass 12 gebildet sein kann, wobei eine gemeinsame Dichtung 17 vorgesehen ist, welche den Einlass 11, den Auslass 12 und die Aussparung 25 gegenüber der Umgebung abdichten. Über einen nicht dargestellten Flansch kann das Leitungselement 10 über der Aussparung 25 mit dem Lagergehäuse befestigt werden, wobei der Einlass 11 und die Zuleitung 21 sowie der Auslass 12 und die Ableitung 12 fluidleitend miteinander verbunden werden.

Ein entsprechender Flansch ist in Figur 5 dargestellt, allerdings im Zusammenhang mit einem Bypassverbindung, die als Rohrverbindung 24 zwischen der Zuleitung 11 und der Ableitung 12 vorgesehen ist. Eine solche Bypassverbindung 14 ist in dem in Figur 3 gezeigten Ausführungsbeispiel nicht vorgesehen, da hier bereits die Aussparung 25 einen Bypass bildet.

Wie gesagt zeigt Figur 4, dass die Bypassverbindung 16 als Aussparung 26 in dem Leitungselement 10 in einem Flansch 181 zur mechanischen und fluidleitenden Anbindung der Zuleitung 11 an den Einlass 21 sowie der Ableitung 12 an den Auslass 22 ausgebildet sein kann, wobei eine gemeinsame Dichtung 171 vorgesehen ist, welche den Flansch 181 und die Bypassverbindung 16 gegenüber dem Lagergehäuse 29 abdichten.

Figur 5 zeigt, dass die Bypassverbindung 14 als Rohrverbindung 24 ausgebildet sein kann, der stromaufwärts von der Zuleitung 11 und stromabwärts von der Ableitung 12 in dem Leitungselement 10 angeordnet ist.

Die Bypassverbindungen 14, 15,16 weisen einen Strömungswiderstand K10 auf, der geringer ist als der Strömungswiderstand K20 des inneren Kühlmittelpfads 23 des Lagergehäuses. Die Bypassverbindungen 14, 15 und 16 können auch kombiniert werden, um kumuliert den entsprechend geringeren Strömungswiderstand aufzuweisen, als der innere Kühlmittelpfad 23. Es ist vorgesehen, dass der Strömungswiderstand K10 der Bypassverbindung 14, 15, 16 für Fluide mit einer Dichte und Viskosität, wie sie Kühlwasser aufweist, 2 bis 4mal, insbesondere 2,5 bis 3,5-mal geringer ist als der Strömungswiderstand K20 des inneren Kühlmittelpfads 23 des Lagergehäuses. Der Volumenstrom V10, V20 durch die Bypassverbindung 14, 15, 16 bzw. den Kühlkreislauf 23 ergibt sich aus dem Produkt zwischen der Druckdifferenz zwischen der Zuleitung und der Ableitung und dem jeweiligen Strömungswiderstand K10 bzw. K20.

### Bezugszeichenliste:

- 6: Verdichter
- 10: Leitungselement
- 11: Zuleitung
- 12: Ableitung
- 14: Bypassverbindung
- 15: Bypassverbindung
- 16: Bypassverbindung
- 17: Dichtung
- 20: Turbolader
- 21: Einlass
- 22: Auslass
- 23: Kühlmittelpfad
- 24: Rohrverbindung
- 25: Aussparung
- 26: Aussparung
- 29: Lagergehäuse
- 30: Verbrennungsmotor
- 31: Kühlkreislauf
- 32: Ölkühler
- 33: zusätzliche Wasserpumpe
- 171: Dichtung
- 181: Flansch
- K10: Strömungswiderstand
- K20: Strömungswiderstand
- M: Motor
- V10: Volumenstrom
- V20: Volumenstrom
- V32: Volumenstrom

## Patentansprüche

1. Leitungselement (10) für eine flüssigkeitsgekühlte Komponente eines Verbrennungsmotors (30), mit einer Zuleitung (11) zur Zuführung von Kühlflüssigkeit an die Komponente und einer Ableitung (12) zur Abführung von Kühlflüssigkeit aus der Komponente, wobei die Komponente einen inneren Kühlmittelpfad (23) aufweist, der einen Einlass (21) aufweist, der fluidleitend mit der Zuleitung (11) verbindbar ist, und einen Auslass (22), der fluidleitend mit der Ableitung (12) verbindbar ist, und wobei die Zuleitung (11) außerdem über eine Bypassverbindung (14, 15, 16) fluidleitend mit der Ableitung (12) verbunden ist, **dadurch gekennzeichnet, dass** die Komponente (10) ein Lagergehäuse (29) eines Verdichters (6) zur Verdichtung von Luft und zur Leitung von Luft an den Verbrennungsmotor (30) ist.

2. Lagergehäuse (29) eines Verdichters (6) zur Verdichtung von Luft und zur Leitung von Luft an den Verbrennungsmotor (30), welches zu einem Leitungselement (10) nach Anspruch 1 korrespondiert, wobei die Bypassverbindung (15) als Aussparung (25) in dem Lagergehäuse (29) zwischen dem Einlass (11) und dem Auslass (12) gebildet ist, wobei eine gemeinsame Dichtung (17) vorgesehen ist, welche den Einlass (11), den Auslass (12) und die Aussparung (25) gegenüber der Umgebung abdichten.

3. Leitungselement (10) nach Anspruch 1, wobei die Bypassverbindung (16) als Aussparung (26) in dem Leitungselement (10) in einem Flansch (181) zur mechanischen und fluidleitenden Anbindung der Zuleitung (11) an den Einlass (21) sowie der Ableitung (12) an den Auslass (22) ausgebildet ist, wobei eine gemeinsame Dichtung (171) vorgesehen ist, welche den Flansch (181) und die Bypassverbindung (16) gegenüber der Komponente abdichten.

4. Leitungselement (10) nach einem der Ansprüche 1 oder 3, wobei die Bypassverbindung (14) als Rohrverbindung (24) ausgebildet ist, die stromaufwärts von der Zuleitung (11) und stromabwärts von der Ableitung (12) in dem Leitungselement (10) angeordnet ist.

5. Leitungselement (10) nach einem oder mehreren der Ansprüche 1, 3 oder 4, wobei ein Strömungswiderstand (K10) der Bypassverbindung (14, 15, 16) geringer ist als ein Strömungswiderstand (K20) des inneren Kühlmittelpfads (23) der Komponente.

6. Leitungselement (10) nach Anspruch 5, wobei der Strömungswiderstand (K10) der Bypassverbindung (14, 15, 16) für Fluide mit einer Dichte und Viskosität, wie sie Kühlwasser aufweist, 2 bis 4mal, insbesondere 2,5 bis 3,5-mal geringer ist als der Strömungswiderstand (K20) des inneren Kühlmittelpfads (23) der Komponente.

7. Leitungselement nach Anspruch 6, wobei die Komponente eine Turbine (27) aufweist, durch die im Betrieb des Verbrennungsmotors (30) Abgas leitbar ist, das die Turbine (27) antreibt, wobei die Turbine (27) über eine im Lagergehäuse (29) gelagerte Welle mit dem Verdichter (6) verbunden ist.

8. Verwendung eines Leitungselements (10) nach einem der Ansprüche 1 oder 3 bis 7, in einem mit Flüssigkeit betriebenen Kühlkreislauf (31) an einem Verbrennungsmotor (30).

9. Verwendung eines Leitungselements (10) an einem Verbrennungsmotor (30) entsprechend Anspruch 8, wobei das Leitungselement (10) stromabwärts von einem Ölkühler (32) angeordnet ist, wobei der Ölkühler (32) dazu ausgestaltet ist, einen Wärmestrom zwischen Motoröl aus dem Verbrennungsmotor (30) und der Kühlflüssigkeit auszutauschen.

10. Verwendung eines Leitungselements (10) entsprechend Anspruch 9, wobei stromabwärts von dem Ölkühler (32) eine zusätzliche elektrisch betriebene Wasserpumpe (33) zur Förderung von Kühlflüssigkeit durch den Ölkühler (32), das Leitungselement (10) und die Komponente vorgesehen ist.

## Claims

1. Line element (10) for a liquid-cooled component of an internal combustion engine (30), with a supply line (11) for supplying coolant to the component and a discharge line (12) for discharging coolant from the component, wherein the component has an internal coolant path (23) which has an inlet (21) which can be connected to the supply line (11) in a fluid-conducting manner, and an outlet (22) which can be connected to the discharge line (12) in a fluid-conducting manner, and wherein the supply line (11) is also connected to the discharge line (12) in a fluid-conducting manner via a bypass connection (14, 15, 16), **characterized in that** the component (10) is a bearing housing (29) of a compressor (6) for compressing air and for conducting air to the internal combustion engine (30).

2. Bearing housing (29) of a compressor (6) for compressing air and for supplying air to the internal combustion engine (30), which corresponds to a line element (10) according to claim 1, wherein the bypass connection (15) is formed as a recess (25) in the bearing housing (29) between the inlet (11) and the outlet (12), wherein a common seal (17) is provided which seals the inlet (11), the outlet (12) and the recess (25) from the environment.

3. Conduit element (10) according to claim 1, wherein the bypass connection (16) is designed as a recess (26) in the conduit element (10) in a flange (181) for the mechanical and fluid-conducting connection of the supply line (11) to the inlet (21) and the discharge line (12) to the outlet (22), wherein a common seal (171) is provided which seals the flange (181) and the bypass connection (16) with respect to the component.

4. Conduit element (10) according to one of claims 1 or 3, wherein the bypass connection (14) is designed as a pipe connection (24) which is arranged upstream of the supply line (11) and downstream of the discharge line (12) in the conduit element (10).

5. Conduit element (10) according to one or more of claims 1, 3 or 4, wherein a flow resistance (K10) of the bypass connection (14, 15, 16) is lower than a flow resistance (K20) of the inner coolant path (23) of the component.

6. Conduit element (10) according to claim 5, wherein the flow resistance (K10) of the bypass connection (14, 15, 16) for fluids having a density and viscosity such as cooling water is 2 to 4 times, in particular 2.5 to 3.5 times lower than the flow resistance (K20) of the inner coolant path (23) of the component.

7. Conduit element according to claim 6, wherein the component has a turbine (27) through which exhaust gas can be conducted during operation of the internal combustion engine (30), which drives the turbine (27), wherein the turbine (27) is connected to the compressor (6) via a shaft mounted in the bearing housing (29).

8. Use of a line element (10) according to one of claims 1 or 3 to 7 in a liquidoperated cooling circuit (31) on an internal combustion engine (30).

9. Use of a line element (10) on an internal combustion engine (30) according to claim 8, wherein the line element (10) is arranged downstream of an oil cooler (32), wherein the oil cooler (32) is designed to exchange a heat flow between engine oil from the internal combustion engine (30) and the cooling liquid.

10. Use of a line element (10) according to claim 9, wherein an additional electrically operated water pump (33) is provided downstream of the oil cooler (32) for pumping cooling liquid through the oil cooler (32), the line element (10) and the component.

## Revendications

1. Elément de conduite (10) pour un composant refroidi par liquide d'un moteur à combustion interne (30), avec une conduite d'alimentation (11) pour amener du liquide de refroidissement au composant et une conduite de refoulement (12) pour évacuer le liquide de refroidissement du composant, le composant ayant un chemin de liquide de refroidissement interne (23), qui présente une entrée (21), qui peut être reliée de manière conductrice de fluide à la conduite d'alimentation (11), et une sortie (22), qui peut être reliée de manière conductrice de fluide à la conduite de refoulement (12), et dans laquelle la conduite d'alimentation (11) est également reliée de manière conductrice de fluide à la conduite de refoulement (12) par l'intermédiaire d'un raccord de dérivation (14, 15, 16), **caractérisé en ce que** le composant (10) est un boîtier de palier (29) d'un compresseur (6) pour comprimer de l'air et pour alimenter en air le moteur à combustion interne (30).

2. Boîtier de palier (29) d'un compresseur (6) pour comprimer de l'air et pour alimenter en air le moteur à combustion interne (30), qui correspond à un élément de conduite (10) selon la revendication 1, dans lequel le raccord de dérivation (15) fait office d'un évidement (25) est formé dans le boîtier de palier (29) entre l'entrée (11) et la sortie (12), un joint commun (17) étant prévu qui assure l'étanchéité de l'entrée (11), la sortie (12) et l'évidement (25) sont étanches à l'environnement.

3. Elément de conduite (10) selon la revendication 1, dans lequel le raccord de dérivation (16) fait office d'évidement (26) dans l'élément de conduite (10) dans une bride (181) pour le raccordement mécanique et fluidique de la conduite d'alimentation (11) vers l'entrée (21) et la conduite de refoulement (12) est formée sur la sortie (22), un joint commun (171) étant prévu qui recouvre la bride (181) et Scellez le raccord de bypass (16) contre le composant.

4. Elément de conduite (10) selon l'une des revendications 1 ou 3, dans lequel le raccord de dérivation (14) est conçu comme un raccord de tuyauterie (24) situé en amont de la conduite d'alimentation (11) et en aval de la conduite de refoulement (12). dans la ligne, un élément ( 10) est disposé.

5. Elément de conduite (10) selon une ou plusieurs des revendications 1, 3 ou 4, dans lequel une résistance à l'écoulement (K10) du raccord de dérivation (14, 15, 16) est inférieure à une résistance à l'écoulement (K20) du trajet de liquide de refroidissement interne. (23) du composant.

6. Elément de conduite (10) selon la revendication 5, dans lequel la résistance à l'écoulement (K10) du raccord de dérivation (14, 15, 16) pour des fluides ayant une densité et une viscosité telles que celles de l'eau de refroidissement est de 2 à 4 fois, en particulier de 2,5. à 3,5 fois est inférieure à la résistance à l'écoulement (K20) du trajet de liquide de refroidissement interne (23) du composant.

7. Elément de conduite selon la revendication 6, dans lequel le composant présente une turbine (27) à travers laquelle les gaz d'échappement peuvent être acheminés pendant le fonctionnement du moteur à combustion interne (30), qui entraîne la turbine (27), la turbine (27) étant réalisée via un le boîtier de roulement (29) stocké VVelle est relié au compresseur (6).

8. Utilisation d'un élément de conduite (10) selon l'une des revendications 1 ou 3 à 7 dans un circuit de refroidissement (31) fonctionnant par liquide sur un moteur à combustion interne (30).

9. Utilisation d'un élément de conduite (10) sur un moteur à combustion interne (30) selon la revendication 8, dans laquelle l'élément de conduite (10) est disposé en aval d'un refroidisseur d'huile (32), le refroidisseur d'huile (32) étant conçu pour avoir un VVârmestrom entre l'huile moteur du moteur à combustion (30) et le liquide de refroidissement à échanger.

10. Utilisation d'un élément de conduite (10) selon la revendication 9, dans laquelle en aval du refroidisseur d'huile (32) se trouve une pompe à eau électrique supplémentaire (33) pour transporter le liquide de refroidissement à travers le refroidisseur d'huile (32), l'élément de conduite (10) et le composant est fourni.
